# EUROPEAN PATENT APPLICATION

(11) **EP 2 431 896 A1**
(43) Date of publication of application: **21.03.2012**
(21) Application number: 11786269.8
(22) Date of filing: 22.04.2011
(51) Int. Cl.: G06F 17/30, G06Q 10/00, G06Q 50/00

(54) **DATABASE, MANAGEMENT SERVER, AND MANAGEMENT PROGRAM**

(30) Priority: 25.05.2010 JP 2010119643
(71) Applicant: IPS Co., Ltd., Kobe-shi, Hyogo 650-0044 (JP)
(72) Inventor: AKITA, Toshifumi, Kobe-shi Hyogo 650-0044 (JP)
(74) Representative: Pitchford, James Edward
(86) International application number: PCT/JP2011/002350
(87) International publication number: WO 2011/148565

(57) **Abstract**

[Problems] It is allowed to make a variety of inquiries into reports at a low cost without requiring a complex report program.

[Means for solving the Problems] A DWH server DB 310 includes: a slip description data DB 100 for storing slip description data that are slip data generated for every business unit in a business process and slip description data created from the slip data; an index data DB 101 for storing index data that are data utilized for retrieval of the slip description data, in which the content of a common item suitable for grasp of a business process, the content of a key item to which slip description specifying information capable of uniquely specifying a slip description is set up and the content of a slip description identification information item to which slip description identification information capable of specifying the slip description related to the slip description is set up are associated with each other in the slip description data units, and are associated with each other in the same item of each of the slip description data; and a slip description creating information DB 102 for storing slip description creating information in which a creation slip description type is associated with a usage slip description type.

## Description

### Technical Field

The present invention relates to a database for storing various kinds of data on businesses, a slip data management server provided with this database and a management program contained in the management server.

### Background Art

Heretofore, one so-called ERP (Enterprise Resource Planning) has become mainstream as package software for establishing a core business system for a company. In a core business system in which this ERP is contained, it is most often constructed on a relational database, and design of an application program that focuses on business processes is mostly made. Thus, it is often operated without focusing on report output.

For the purpose of process the large amount of business data at a high speed, analyzing the business data from various angles, and outputting reports under such a situation, various data warehouse systems that undertakes a complementary role to the core business system have been provided (see Patent Literature 1).

### Prior Art Literature

### Patent Literature

Patent Literature 1: Japanese Patent Application Publication No. 2002-312208

### Summary of the Invention

### Problems to be solved by the Invention

However, in the conventional data warehouse system, business data of each business acquired from a core business system side are managed. For this reason, there has been a problem that report data on each business can be provided, but report data on plural kinds of businesses for grasping progress of the business and the like cannot be provided.

On the other hand, in order to manage report data on plural kinds of businesses, there is a need to newly develop a complex program for managing reports and to contain it. Therefore, a development cost and an operational cost become enormous. For this reason, it has been found difficult to realize a system for managing report data on plural kinds of businesses.

It is an object of the present invention to resolve the problems described above and to provide report data on plural kinds of businesses at a low cost without requiring a complex program for managing reports.

### Means for Solving the Problems

According to the present invention, there is provided a database for storing various kinds of data on businesses, the database including: a slip description data memory for storing slip description data that are slip data generated for every business unit in a business process and slip description data created from the slip data; an index data memory for storing index data that are data utilized for retrieval of the slip description data, the content of a common item, the content of a key item and the content of a slip description identification information item being associated with each other in the slip description data units and being associated with each other in the same item of each of the slip description data in the index data, the content of the common item being suitable for grasp of a business process in each business among items respectively set up to the slip description data on various kinds of businesses, slip description specifying information capable of uniquely specifying a slip description indicated by the slip description data being set up to the content of the key item, slip description identification information capable of specifying slip descriptions related to the slip description indicated by the slip description data being set up to the content of the slip description identification information item in the index data; and a slip description creating reference information memory for storing slip description creating reference information, an output target slip description class and a usage slip description class being associated with each other in the slip description creating reference information, the output target slip description class indicating a class of an output target slip description set up as an output target, the usage slip description class indicating a class of a usage slip description, the class of the usage slip description being one kind of slip description or two or more kinds of slip descriptions utilized for creation of the output target slip description of the output target slip description class among slip descriptions indicated by the slip description data stored in the slip description data memory.

By configuring it as described above, it becomes possible to provide slip description data on plural kinds of businesses at a low cost without requiring a complex program for managing slip descriptions.

The database may be provided in a management server that manages various kinds of data on the businesses. The management server may include: an output target slip description class receiver for receiving designation of an output target slip description class from a client terminal; a usage slip description class determiner for determining a usage slip description class by referring to the slip description creating reference information memory, the usage slip description class being a class of a usage slip description utilized for creation of the output target slip description of the output target slip description class received by the output target slip description class receiver; an index data extractor for extracting index data corresponding to the slip description data of the usage slip description by referring to the index data memory, the usage slip description being the slip description of the usage slip description class determined by the usage slip description class determiner; a used item adder that extracts, by referring to the slip description data memory, the content of a used item defined in advance and utilized for creation of the output target slip description among items set up to the slip description data of the usage slip description, the used item adder adding the content of the extracted used item into the index data extracted by the index data extractor; a slip description data analyzer for analyzing, by referring to the slip description data memory, the slip description data of the slip description specified by the slip description identification information, the index data to which the content of the used item is added being set up to the slip description identification information; a necessary data determiner for determining data necessary when to create the slip description data of the output target slip description of the content of the used item added by the used item adder in accordance with the analysis result by the slip description data analyzer; an output target slip description creator for generating data of a setup item to be set up to the slip description data of the slip description of the output target slip description class using the necessary data determined by the necessary data determiner, the output target slip description creator creating the slip description data of the output target slip description; and an output target slip description transmitter for transmitting the slip description data of the output target slip description created by the output target slip description creator to the client terminal.

The content of the used item is numerical data on numerical items, and the data of the setup item are data of a calculation item calculated using the numerical data.

Further, according to the present invention, there is provided a management server for managing various kinds of data on businesses, including a database for storing the various kinds of data, wherein the database includes: a slip description data memory for storing slip description data that are slip data generated for every business unit in a business process and slip description data created from the slip data; an index data memory for storing index data that are data utilized for retrieval of the slip description data, the content of a common item, the content of a key item and the content of a slip description identification information item being associated with each other in the slip description data units and being associated with each other in the same item of each of the slip description data in the index data, the content of the common item being suitable for grasp of a business process in each business among items respectively set up to the slip description data on various kinds of businesses, slip description specifying information capable of uniquely specifying a slip description indicated by the slip description data being set up to the content of the key item, slip description identification information capable of specifying slip descriptions related to the slip description indicated by the slip description data being set up to the content of the slip description identification information item in the index data; and a slip description creating reference information memory for storing slip description creating reference information, an output target slip description class and a usage slip description class being associated with each other in the slip description creating reference information, the output target slip description class indicating a class of an output target slip description set up as an output target, the usage slip description class indicating a class of a usage slip description, the class of the usage slip description being one kind of slip description or two or more kinds of slip descriptions utilized for creation of the output target slip description of the output target slip description class among slip descriptions indicated by the slip description data stored in the slip description data memory, and wherein the management server includes: an output target slip description class receiver for receiving designation of an output target slip description class from a client terminal; a usage slip description class determiner for determining a usage slip description class by referring to the slip description creating reference information memory, the usage slip description class being a class of a usage slip description utilized for creation of the output target slip description of the output target slip description class received by the output target slip description class receiver; an index data extractor for extracting, by referring to the index data memory, index data corresponding to the slip description data of the usage slip description, the usage slip description being the slip description of the usage slip description class determined by the usage slip description class determiner; a used item adder that extracts, by referring to the slip description data memory, the content of a used item defined in advance and utilized for creation of the output target slip description among items set up to the slip description data of the usage slip description, the used item adder adding the content of the extracted used item into the index data extracted by the index data extractor; a slip description data analyzer for analyzing the slip description data of the slip description specified by the slip description identification information by referring to the slip description data memory, the index data to which the content of the used item is added being set up to the slip description identification information; a necessary data determiner for determining data necessary when to create the slip description data of the output target slip description of the content of the used item added by the used item adder in accordance with the analysis result by the slip description data analyzer; an output target slip description creator for generating data of a setup item to be set up to the slip description data of the slip description of the output target slip description class using the necessary data determined by the necessary data determiner, the output target slip description creator creating the slip description data of the output target slip description; and an output target slip description transmitter for transmitting the slip description data of the output target slip description created by the output target slip description creator to the client terminal.

Moreover, according to the present invention, there is provided a management program for managing various kinds of data on businesses stored in a database, the database including: a slip description data memory for storing slip description data that are slip data generated for every business unit in a business process and slip description data created from the slip data; an index data memory for storing index data that are data utilized for retrieval of the slip description data, the content of a common item, the content of a key item and the content of a slip description identification information item being associated with each other in the slip description data units and being associated with each other in the same item of each of the slip description data in the index data, the content of the common item being suitable for grasp of a business process in each business among items respectively set up to the slip description data on various kinds of businesses, slip description specifying information capable of uniquely specifying a slip description indicated by the slip description data being set up to the content of the key item, slip description identification information capable of specifying slip descriptions related to the slip description indicated by the slip description data being set up to the content of the slip description identification information item in the index data; and a slip description creating reference information memory for storing slip description creating reference information, an output target slip description class and a usage slip description class being associated with each other in the slip description creating reference information, the output target slip description class indicating a class of an output target slip description set up as an output target, the usage slip description class indicating a class of a usage slip description, the class of the usage slip description being one kind of slip description or two or more kinds of slip descriptions utilized for creation of the output target slip description of the output target slip description class among slip descriptions indicated by the slip description data stored in the slip description data memory, wherein the management program causes a computer to execute: receiving designation of an output target slip description class from a client terminal; by referring to the slip description creating reference information memory, determining a usage slip description class, the usage slip description class being a class of a usage slip description utilized for creation of the output target slip description of the output target slip description class received in the receiving designation of an output target slip description class; by referring to the index data memory, extracting index data corresponding to the slip description data of the usage slip description, the usage slip description being the slip description of the usage slip description class determined in the determining a usage slip description class; by referring to the slip description data memory, extracting the content of a used item defined in advance and utilized for creation of the output target slip description among items set up to the slip description data of the usage slip description, and adding the content of the extracted used item into the index data extracted in the extracting index data corresponding to the slip description data; by referring to the slip description data memory, analyzing the slip description data of the slip description specified by the slip description identification information, the index data to which the content of the used item is added being set up to the slip description identification information; determining data necessary when to create the slip description data of the output target slip description of the content of the used item added by the used item adder in accordance with the analysis result in the analyzing the slip description data of the slip description; generating data of a setup item to be set up to the slip description data of the slip description of the output target slip description class using the necessary data determined in the determining data necessary when to create the slip description data, and creating the slip description data of the output target slip description; and transmitting the slip description data of the output target slip description created in creating the slip description data to the client terminal.

### Effects of the Invention

According to the present invention, it becomes possible to provide report data on the plural kinds of businesses at a low cost without requiring a complex program for managing reports.

### Brief Description of the Drawings

FIG. 1 is a block diagram showing a configuration example of a slip description outputting system according to one embodiment of the present invention.
FIGS. 2A and 2B are explanatory drawings showing an example of a storage state of index data.
FIG. 3 is an explanatory drawing showing an example of a storage state of slip description creating information.
FIG. 4 is a flowchart showing an example of a slip description data registering process.
FIG. 5 is a flowchart showing an example of a slip description outputting process.
FIG. 6 is an explanatory drawing showing an example of a slip description selecting screen.
FIGS. 7A and 7B are explanatory drawings showing an example of extracted index data (slip description output information).
FIGS. 8A and 8B are explanatory drawings showing an example of index data (slip description output information) to which a used item is added.
FIGS. 9A and 9B are explanatory drawings showing an example of index data (slip description output information) to which the content of property data is added.
FIG. 10 is an explanatory drawing showing an example of master data.
FIG. 11 is an explanatory drawing showing an example of layout selecting screen.
FIG. 12 is an explanatory drawing showing an example of a slip description display screen.

### Mode for Carrying out the Invention

Hereinafter, an example of one embodiment according to the present invention will be described with reference to the drawings.

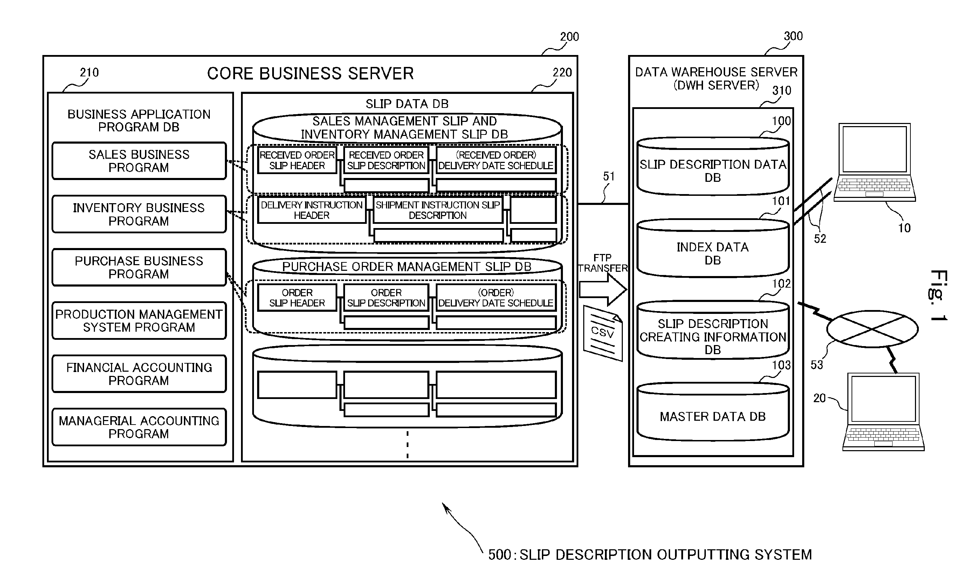

FIG. 1 is a block diagram showing a configuration example of a slip description outputting system 500 according to one embodiment of the present invention. As shown in FIG. 1, the slip description outputting system 500 includes a core business server 200, a data warehouse server (DWH server) 300, a client 10 and a client 20. The respective elements, which constitute the slip description outputting system 500, are connected by a communication network.

In the present embodiment, the core business server 200 is connected to the DWH server 300 by means of a dedicated line 51. Further, the client 10 is connected to the DWH server 300 by means of a LAN (Local Area Network) 52. Further, the client 20 is connected to the DWH server 300 by means of the Internet 53.

The core business server 200 is a server managed by a data collector that is a collection target of slip data, for example, and has various kinds of functions for managing slip description information on various kinds of businesses. The core business server 200 is configured by a general information-processing apparatus provided with an OS (Operating System) and a relational DB. In this regard, the "slip description" means a description of a type of slip such as a slip, a report, books and the like. Further, the "report" is the general term of books and a type of slip. In this regard, the "books" denote one in which matters concerning purse of money or goods are filled, and the "slip" denotes one that is data to become a basis when to create books and constitutes evidence of transactions and the like on a business. In the present embodiment, the case where the core business server 200 deals with only the slip data as slip description data will be described as an example.

In the present embodiment, the core business server 200 includes a business application program DB 210 and a slip data DB 220.

The business application program DB 210 is a storage medium for storing programs used for various kinds of businesses. A sales business management program, a sales business management program, a production management program, a financial accounting management program, a managerial accounting management program and the like are included in the programs stored in the business application program DB 210.

The slip data DB 220 is a storage medium for temporarily storing various kinds of slip data collected and marshaled by means of various kinds of information processing using various kinds of programs stored in the business application program DB 210. In the slip data DB 220, for example, received order slip header information, received order slip description information, delivery date schedules and the like are associated with slip data corresponding to a received order slip, and they are stored in a structure capable of retrieving on the basis of a key, such as a slip number. In the slip data DB 220, each of slip data separated for every kind of slip data of each business unit is stored. In this regard, slip data of each business unit that are partially integrated may be stored as well as the case where each of slip data completely separated for every kind of slip data of each business unit is stored. In the present embodiment, the slip data DB 220 is configured by a group of DBs that includes: DBs in each of which partially integrated slip data are stored, such as a sales management slip and inventory management slip DB in which received order slip data and shipment instruction slip data are stored, and DBs provided for every kind of slip data of each business unit, such as a purchase order management slip DB in which purchase order slip data are stored.

The core business server 200 has a function to convert the various kinds of data stored in the slip data DB 220 into a CSV (Comma Separated Values) format in accordance with a predetermined extraction condition and a function to transmit it to the DWH server 300. In this regard, in the present embodiment, the core business server 200 transfers a CSV formed data file to the DWH server 300 on the basis of the FTP (File Transfer Protocol). In this regard, in order to avoid the amount of data to be stored becoming excessive, the slip data DB 220 deletes (or transfers to other external storage device) the slip data that have been transferred to the DWH server 300 at a predetermined time interval.

The DWH server 300 is a server managed by a system administrator of the present system, for example, and has various kinds of functions for realizing a data warehouse. Here, the "data warehouse" denotes a system to analyze relevance between the respective items from among business data such as slip description data accumulated in time series. Further, the DWH server 300 has a function to register the slip data in a predetermined storage region corresponding to the transferred slip data by converting the file with a CSV format transferred from the core business server 200 into a predetermined data format and the like. In this regard, the DWH server 300 may be configured to register the slip data in the predetermined storage region as is left in a state of the CSV format without carrying out conversion of the data format.

Further, the DWH server 300 includes a DWH server DB 310 that is a database (DB) for storing various kinds of data on businesses. In the present embodiment, the DWH server DB 310 includes a slip description data DB 100, an index data DB 101, a report creating information DB 102, a master data DB 103, and an intermediate data DB 104.

The slip description data DB 100 is a storage medium for storing slip data transferred from the core business server 200 in a predetermined format. In this regard, the data stored in the slip description data DB 100 contain ones obtained by extracting predetermined data from the received slip data. Therefore, they contain ones obtained by accumulating slip data simply and ones created as books data on the basis of the slip data. For that reason, in the present embodiment, the data stored in the slip description data DB 100 are generally called as "slip description data". Received order slip description data, shipment slip description data, delivery slip description data, purchase order slip description data and the like are contained in the slip description data, for example.

The index data DB 101 is a storage medium for storing index data updated (or created) on the basis of relevance among the respective slip description data indicated by the slip description data stored in the slip description data DB 100. The index data are data used for retrieval of the slip description data. The index data are also data in which the content of a common item (item that is commonly provided for a part or all of the respective slip description data and is useful for retrieval of slip description data) suitable for grasp of a business process in each business among items respectively set up to the slip description data on various kinds of businesses, the content of a key item, in which slip description specifying information (a slip number of corresponding slip description) capable of uniquely specifying a slip description indicated by slip description data is set up, and the content of a slip number item, in which a slip number capable of specifying the slip description related to the slip description indicated by the slip description data is set up, are associated with each other in the slip description data units and are also associated with each other in the same item of each of the slip description data. In this way, it becomes possible not only to associate them with each other by means of the slip number like a conventional database structure by providing common items in the index data, but also to associate them with each other by means of various items useful for retrieval.

The index data according to the present embodiment are data in which a specific item including a predetermined item (including common items) suitable for grasp of a business process in each of the businesses and a key item defined in advance in each of the businesses of items set up to each of the slip description data on various kinds of businesses, and data indicating the content of the specific item are associated with each other in the slip data unit constituting the slip description data. In this regard, the index data may be configured so as to contain data associated with each other in the books data unit.

The specific item in the index data is set up in advance to a storage region of the DWH server 300. In this regard, in the present embodiment, setup of the specific item can be changed appropriately by an administrator of the DWH server 300 or the like.

Further, it is preferable that the key item is data that become important elements for specifying slip description indicated by the slip description data. In the present embodiment, the case where a slip description number about a name of a slip description indicated by the slip description data is set up as the key item (key) will be explained as an example. In this regard, the key items are not limited to the slip description numbers, and they may be ones capable of specifying the slip description data. Namely, for example, the DWH server 300 may be configured so as to set up an ID and the like, which become a key item, to various kinds of data constituting the slip description data when the DWH server 300 stores the slip description data in the slip description data DB 100.

The index data DB 101 stores index data in a state that each of the index data allows the content of specific items to be arranged according to the specific items. Namely, in the index data DB 101, they are stored in a state that a specific item of each of a plurality of index data is associated with the index data.

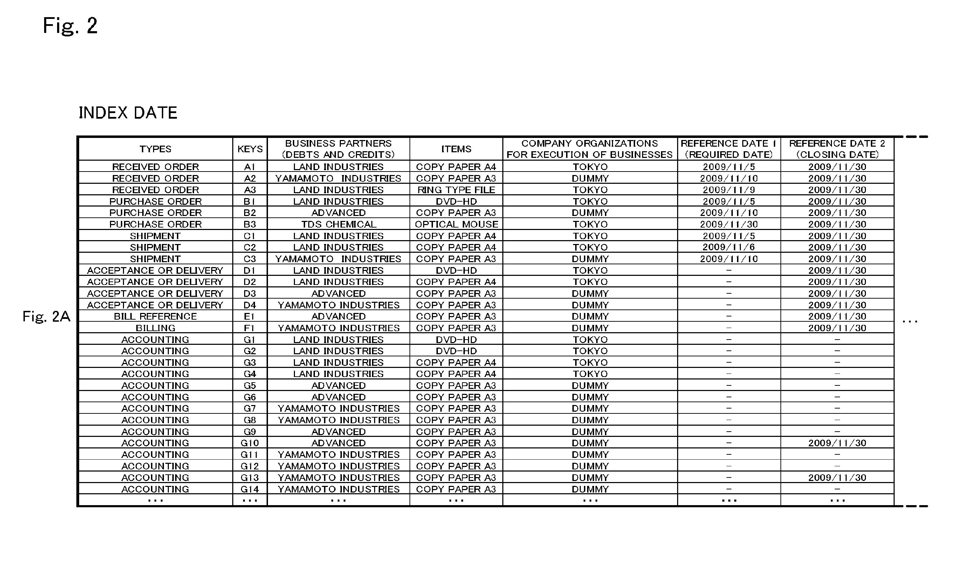

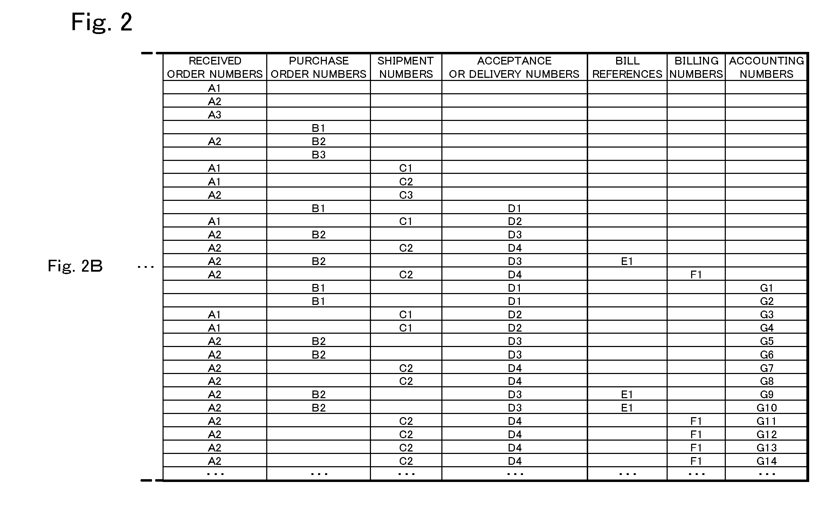

FIGS. 2A and 2B are explanatory drawings showing an example of a storage state of index data in the index data DB 101. As shown in FIGS. 2A and 2B, the index data contain: types (slip description types); business partners (debts and credits); item goods; company organizations for execution of businesses (for example, warehouses, business offices, factories and the like); reference date 1 (required date); reference date 2 (closing date); received order numbers; purchase order numbers; shipment numbers; acceptance or delivery numbers; bill references; billing numbers; and accounting numbers, each of which is a predetermined item. Further, the index data also contain slip description number (that is, received order numbers, purchase order numbers and the like) as a key item. Thus, in the present embodiment, the slip description numbers as the predetermined items and the slip description numbers as the key items are separately managed in the index data.

In this regard, the "slip description type" according to the present embodiment is a name for specifying a class (type or category), which indicates the nature of the respective slip description data, and is set up at the stage at which each of the slip description data is created, for example. In the present embodiment, a "received order" that indicates slip description data on a received order business, a "purchase order" that indicates slip description data on a purchase order business, and the like are set up.

Further, in the present embodiment, in the case where there is a business that was carried out before the business indicated by this slip description number in a business process including the business indicated by the slip description number set up as the key item, each of the index data contains a slip description number of a slip description about a business generated in accordance with the fact that the business has been carried out. Namely, for example, the index data containing data indicating a shipment number that is a slip description number about the shipment business contain data indicating a received order number that is a slip description number about the received order business, which becomes a cause to carry out this shipment business.

In this regard, in the case where there are no data corresponding to the respective index data in the items constituting the index data, the item is dealt with as empty data. In this regard, it may be configured so that slip description data that do not satisfy an index data creating condition stored in the index data DB 101 in advance are not contained in the index data. Namely, for example, by eliminating slip description data that do not contain data indicating a slip description number to create the index data, it is possible to deal with only the slip description data for which relevance between slip descriptions can be grasped from the slip description number, and this makes it possible to prevent an unnecessary processing load caused by managing unsuitable data from being borne.

The slip description creating information DB 102 is a storage medium for storing slip description creating information that indicates a combination of slip description data necessary for outputting various kinds of slip descriptions. Namely, the slip description creating information according to the present embodiment is one that allows not only the slip description, which has already been stored in the slip description data DB 100 as the slip description data, but also the slip description data indicating new information to be created from a plurality of slip description data and to be outputted.

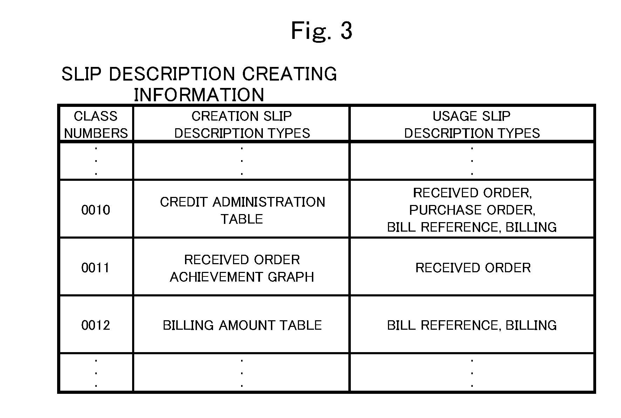

FIG. 3 is an explanatory drawing showing an example of a storage state of the slip description creating information in the slip description creating information DB 102. As shown in FIG. 3, the slip description creating information is information in which a class number for uniquely specifying a class of a slip description as a creation target, a creation slip description type indicating the class (type) of the slip description as the creation target and a usage slip description type indicating each class (type) of one kind of slip description or two or more kinds of slip descriptions used for creation of a slip description with the creation slip description type are associated with each other.

In the case where a slip description of the creation slip description type "credit administration table" is created, for example, the respective slip description data whose classes are "received order", "purchase order", "bill reference", and "billing" are used as shown in FIG. 3. In the present embodiment, information indicating whether a numerical value set up to any item is utilized or not (that is, numerical data necessary for creation of the slip description of a creation target) in the slip description utilized for creation of the slip description that is the creation target is contained as the usage slip description type.

The master data DB 103 is a storage medium for storing master data (containing items that become features of the created slip description and the content thereof, calculation items in which values are calculated using numerical data contained in other slip description data, computation formula data according to the calculation item, and the like, for example), which are data becoming a basis of the slip description created by the slip description creating information. In this regard, the master data according to the present embodiment differ in that data stored in the DWH server 300 are not deleted in principal and accumulated, for example, and only data set up by the administrator of the DWH server 300 are stored. Namely, for example, the latest business partners (or customers) and the latest credit limit, and the latest credit balance that is a calculation item are stored in the master data corresponding to a credit administration table. In this regard, the master data may be configured so as to be associated with a report that is a creation target (that is, output target) and to be contained in the report creating information.

Each of the clients 10, 20 is an information-processing apparatus including a CPU (Central Processing Unit), a ROM, a RAM, a display screen and the like. In the present embodiment, each of the clients 10, 20 has various kinds of applications utilizable to deal with the slip description data, such as a Web browser, spreadsheet software and the like. Further, in the present embodiment, each of the clients 10, 20 has a function to define a query (a slip description class, an output item, and a layout of a slip description) for acquiring necessary slip description data from the DWH server 300, for example, in response to an operational input by a user and a function to transmit it to the DWH server 300.

In the present embodiment, the client 10 has a function to communicate with the DWH server 300 via a LAN and a function to output the data acquired from the DWH server 300 on the display screen by means of predetermined spreadsheet software.

Further, the client 20 has a function to communicate with the DWH server 300 via the Internet and a function to output the data acquired from the DWH server 300 onto the display screen by means of a Web browser.

Next, operations of the core business server 200 and the DWH server 300 in the slip description outputting system 500 according to the present embodiment will be described with reference to the drawings. In this regard, the content of operations and processes particularly with no relationship to the present invention may be omitted.

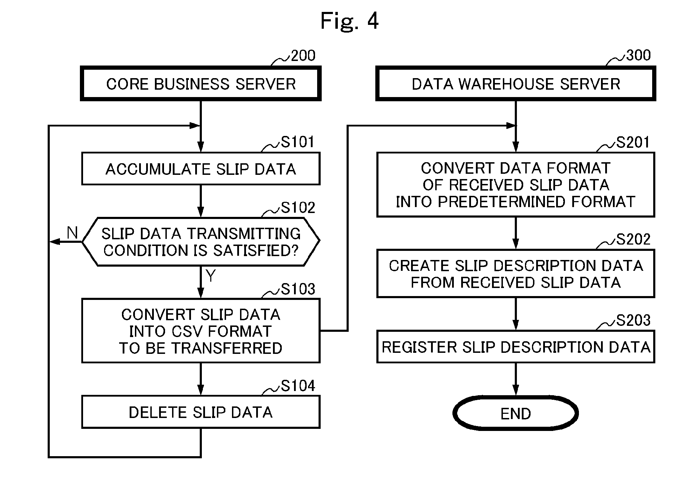

FIG. 4 is a flowchart showing an example of a slip description data registering process carried out by the core business server 200 and the DWH server 300. In the slip description data registering process, a process to store the slip description data, such as slip data accumulated by the core business server 200, or data obtained by extracting or processing predetermined data from the slip data, in the slip description data DB 100 of the DWH server 300 is carried out.

In the slip description data registering process, the core business server 200 first accumulates slip data in the slip data DB 220 (Step S101).

The core business server 200 then determines whether a predetermined slip data transmitting condition is satisfied at a predetermined time interval or not, for example (Step S102). In this regard, the slip data transmitting condition is stored in advance in a memory included in the core business server 200, and "elapse at 1 A.M." and the like are to be set up, for example. Here, in the case where it is determined that the slip data transmitting condition is not satisfied ("N" at Step S101), then the core business server 200 continues to accumulate the slip data.

On the other hand, in the case where it is determined that the slip data transmitting condition is satisfied ("Y" at Step S101), the core business server 200 converts the slip data into a CSV format and transfers it to the DWH server 300 (Step S103).

When the slip data are transferred, the core business server 200 deletes the transferred slip data from the slip data DB 220 (Step S104), and shifts to Step S101. In this regard, the core business server 200 may be configured so that the transferred slip data are left as already transferred data in the case where the amount of data of the slip data does not exceed a predetermined amount, for example. Further, the core business server 200 may be configured so that the transferred slip data are caused to be stored in another storage medium other than the DHW server 300.

On the other hand, when the DWH server 300 receives the slip data, the DWH server 300 converts the data format into a predetermined format (Step S201); creates slip description data from the slip data (Step S202); and registers the created slip description data (Step S203).

At Step S202, the DWH server 300 may use the slip data as they are as the slip description data, or may create slip description data using the item content of one or more slip data. In this regard, in the case where there is a calculation item (calculation item) in the items of the slip description data to be registered, the DWH server 300 carries out, at Step S202, arithmetic processing in accordance with arithmetic expressions that have been set up in the calculation item in advance (for example, an arithmetic expression using one piece or two or more pieces of the content of numerical items in the slip description data), and a process to set up a processing result to the calculation item. By carrying out the process in this manner, it is possible to omit a need to carry out arithmetic processing when to provide slip description data, and this makes it possible to eliminate the need for an arithmetic program for that.

Next, an operation of each of the DWH server 300 and the clients 10, 20 in the slip description outputting system 500 according to the present embodiment will be described with reference to the drawings. In this regard, the content of operations and processes particularly with no relationship to the present invention may be omitted.

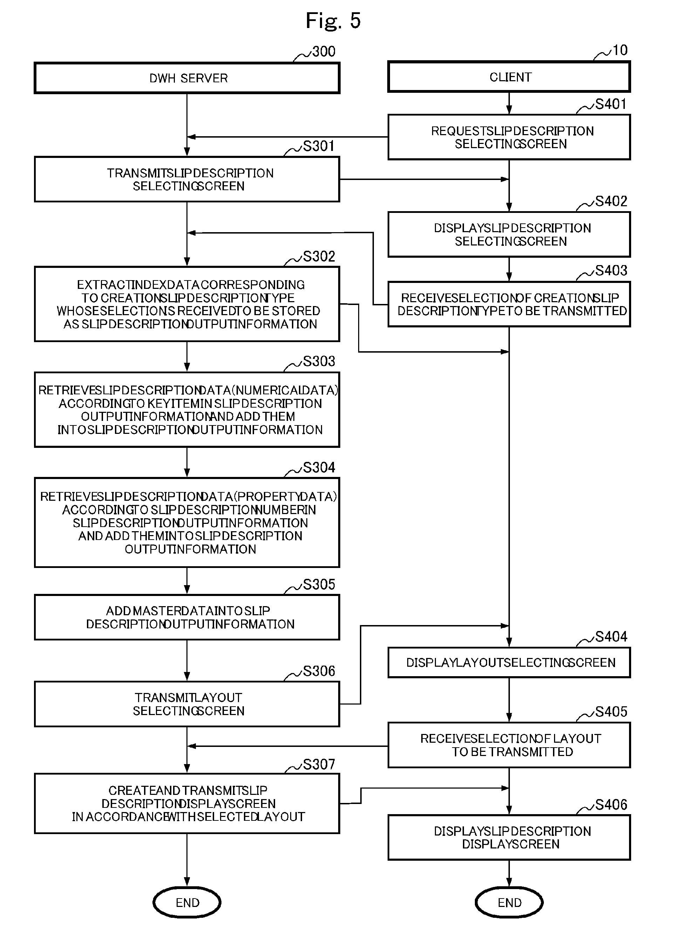

FIG. 5 is a flowchart showing an example of a slip description outputting process carried out by the DWH server 300 and the client 10. In the slip description outputting process, a process for outputting slip description data in response to a request from the client 10 is carried out. In this regard, the types of communication network and kinds of applications to output slip descriptions are merely different from each other between the client 10 and the client 20. Thus, in the present embodiment, the case of using the client 10 will be explained as an example.

In the slip description outputting process, the client 10 first transmits a slip description selecting screen request to the DWH server 300 in response to an operational input by the user, for example (Step S401).

When the slip description selecting screen request is received, the DWH server 300 transmits the slip description selecting screen in response to the received slip description selecting screen request (Step S301). In the present embodiment, the DWH server 300 transmits the data for displaying a screen including a list of the creation slip description type according to the query created by the client 10 to the client 10 as the slip description selecting screen.

When the slip description selecting screen is received, the client 10 displays the slip description selecting screen on the display screen (Step S402).

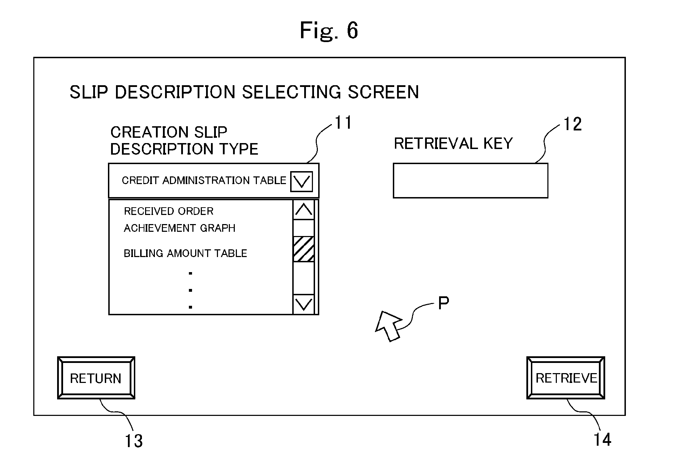

FIG. 6 is an explanatory drawing showing an example of a slip description selecting screen. As shown in FIG. 6, a creation slip description type display region 11 for displaying creation slip description (output target slip description) types in the form of list; a retrieval key entry region 12 for receiving input of a retrieval key (for example, retrieval character string) for retrieval of a name of slip description; a return button 13 for receiving a request to switch a screen displayed on the display screen into other screen; and a retrieval button 14 are provided on the slip description selecting screen.

When the client 10 receives selection of the creation slip description type by means of a cursor P operable by a mouse operation, for example, the client 10 sets the selected creation slip description type to a temporarily selected state. Then, when selection of the retrieval button 14 is received, the client 10 determines that selection of a slip description class according to the creation slip description type, which is in a temporarily selected state, is received (Step S403), and transmits the creation slip description type whose selection is received to the DWH server 300.

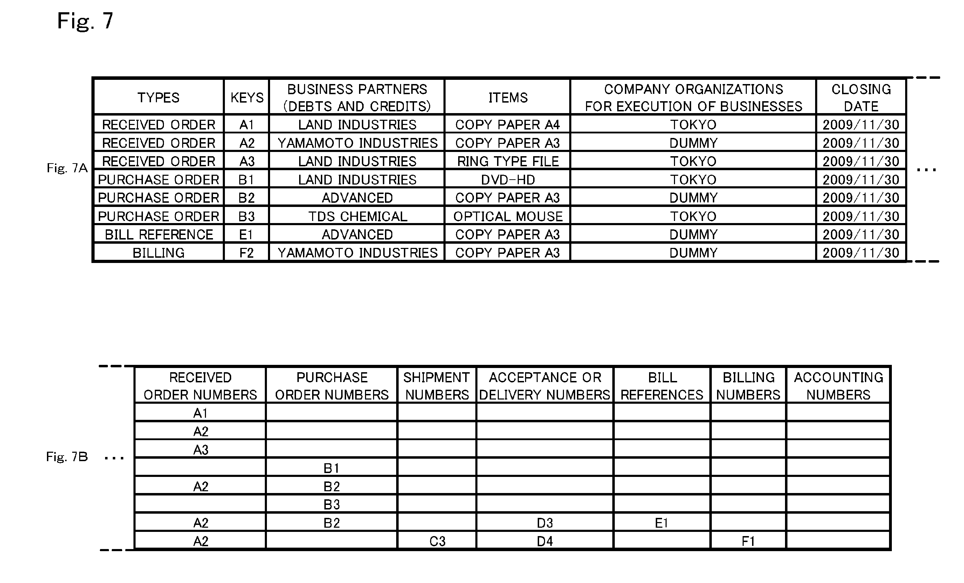

When the creation slip description type is received, the DWH server 300 refers to the slip description creating information DB 102 to: specify a usage slip description type associated with the received creation slip description type; extract index data corresponding to the slip description of the specified usage slip description type from the index data DB 101; and store them as slip description output information (Step S302). In this regard, more specifically, for example, the client 10 receives selection of a creation slip description type "credit administration table" from the user, and the DWH server 300 carries out a process to extract index data to which the usage slip description type (that is, four types of received order, purchase order, bill reference, billing. See FIGS. 2 and 3.) associated with the credit administration table is set up as shown in FIGS. 7A and 7B, for example.

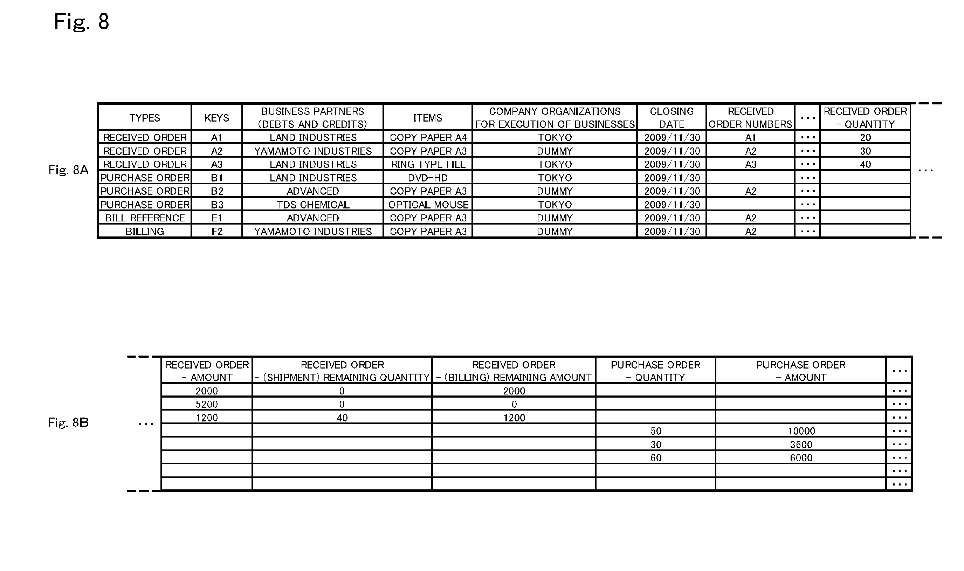

Next, the DWH server 300 refers to the slip description creating information DB 102 to: extract the content of the used item (for example, a numerical item), defined in advance and used for creation of creation slip descriptions, of items set up to the slip description data specified by the key item in the slip description output information; and add the content of used item thus extracted to the slip description output information (Step S303). More specifically, for example, the DWH server 300 carries out a process to add the content of used items defined in advance (here, numerical items, such as a received order quantity, a received order amount, a shipment remaining quantity, and a billing remaining quantity) into the slip description output information as shown in FIGS. 8A and 8B, for example.

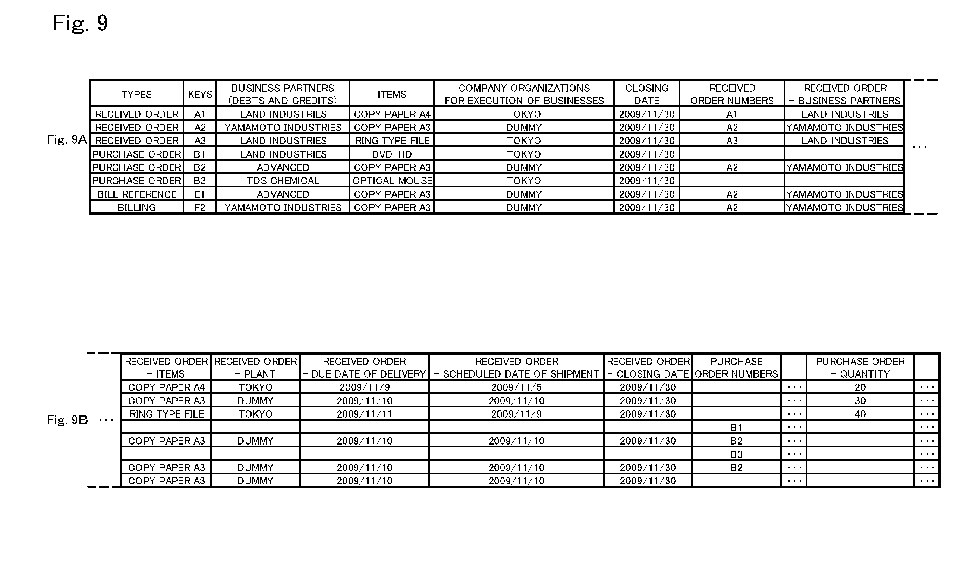

When the content of the used items (for example, numerical data) is added to the slip description output information, the DWH server 300 refers to the slip description creating information DB 102 to: retrieve property data (will be described later) in the slip description data according to the slip description number, which is set up for the slip description output information; and add them into the slip description output information (Step S304). More specifically, for example, the DWH server 300 carries out a process to further add the content of the property data (here, data of the items, such as business partners of the received order, item goods of the received order, due date of delivery of the received order, scheduled date of shipment of the received order and the like, capable of specifying a progress situation of the business) into the slip description output information as shown in FIGS. 9A and 9B, for example.

Here, the property data means data for determining whether the content of the used item (for example, numerical data) is data (necessary data) to be used in relation to the master data or not. Namely, the DWH server 300 determines whether it is data to be reflected to the slip description output information or not on the basis of the property data. More specifically, for example, in the case where numerical values about a received order business are utilized as the numerical data, by confirming property data corresponding to this business (for example, predetermined data such as due date of delivery and closing date), a progress situation of the business is specified, and whether the numerical values are correct or not, whether they are numerical values to be used for creation of the creation slip descriptions or not, and the like are confirmed.

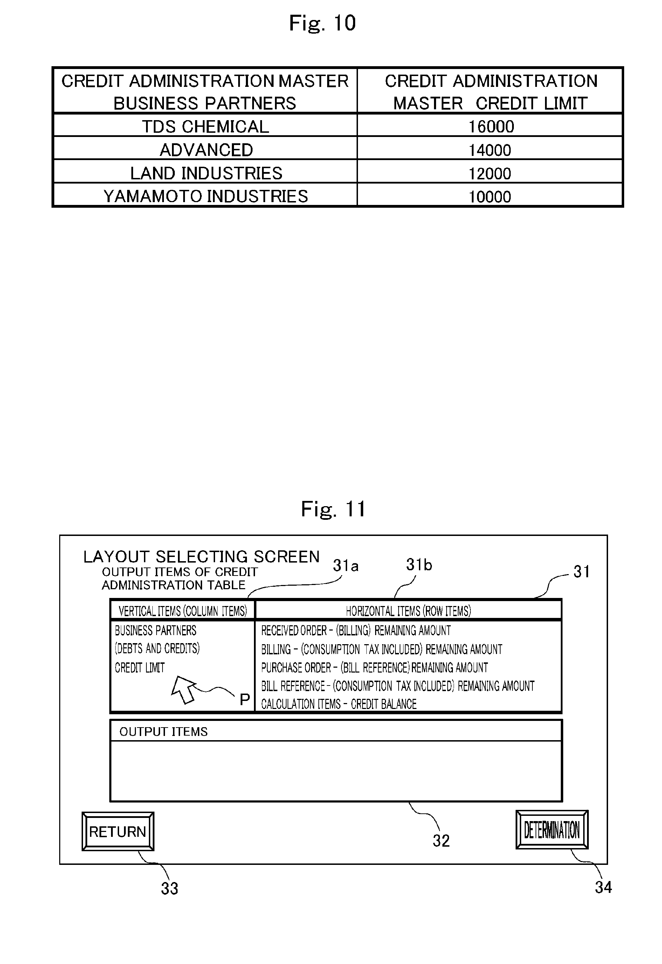

When the property data are added to the slip description output information, the DWH server 300 adds the master data into the slip description output information (Step S305). In the present embodiment, for example, master data as shown in FIG. 10 is added.

When the slip description output information is stored, the DWH server 300 transmits a layout selecting screen according to the stored slip description output information to the client 10 (Step S306).

When the layout selecting screen is received, the client 10 displays the layout selecting screen (Step S404).

FIG. 11 is an explanatory drawing showing an example of the layout selecting screen. As shown in FIG. 11, an output candidate item display region 31 for selectively displaying various kinds of items that are contained in the slip description output information stored in an intermediate table; an output item display region 32 for displaying an item that becomes an output target; a return button 33; and a determination button 34 are provided on the layout selecting screen.

In the present embodiment, the client 10 carries out a process to move the output candidate item displayed in the output candidate item display region 31 to the output item display region 32 by receiving a drag operation using a mouse, for example. Here, in the output candidate item display region 31, a column item display region 31a for selectively displaying a longitudinal item (or column item) set up in advance as a main item representing a feature of the respective slip descriptions in the master data, and a lateral item display region 31b for selectively displaying a lateral item (or row item) set up in advance as a sub item (or detail item) having a correspondence relationship to the main item in the master data are provided. In this regard, it may be configured so that a plurality of column items having relevance are stored in the master data.

Here, for example, when selection of the determination button 34 is received by means of a drag operation using the mouse in a state that the "business partners (debts and credits)", "branches of business partner" and "credit limit" of the column items and the "credit balance" of the lateral items are respectively arranged in the output item display region 32, the client 10 determines that the selection of the layout is received, and transmits the layout selecting information indicating the item arranged in the output item display region 32 to the DWH server 300 (Step S405). BY configuring it in this manner, the DWH server 300 allows a user of the client 10 to create a slip description display screen containing only useful items.

When the layout selecting information is received, the DWH server 300 creates a slip description display screen in accordance with the layout selecting information, and transmits it to the client 10 (Step S307).

In this regard, the DWH server 300 refers to the property data at this time to carry out analysis of the slip description output information, and to carry out a process to determine the content of the used item (for example, numerical data) utilized for slip descriptions to be outputted to the slip description display screen. Namely, at Step S307, the DWH server 300 carries out a process to analyze the property data set up to the slip description output information; a process to determine data (necessary data) necessary when to create the slip description data of the creation slip description of the content of the used item (for example, numerical data) in accordance with an analysis result; a process to generate data (arithmetic data) of a setup item (for example, a calculation item) set up to the slip description data of the creation slip description using the necessary data; and a process to create the slip description data of the creation slip description.

When the slip description display screen created by the DWH server 300 is received, the client 10 displays the slip description display screen (Step S406).

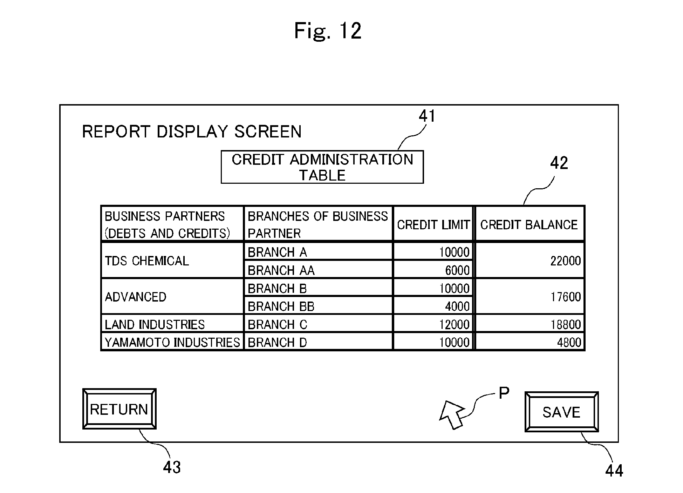

FIG. 12 is an explanatory drawing showing an example of the slip description display screen. As shown in FIG. 12, in the slip description display screen according to the present embodiment, a creation slip description type display region 41 for displaying a creation slip description type, a slip description display region 42 for displaying slip descriptions based upon the slip description output information, a return button 43 for returning to a state of a previous screen, and a save button 44 for receiving a request to store (or save) the displayed slip description image in a storage medium included in the client 10 are provided.

Here, in the slip description displayed in the present embodiment, as shown in FIG. 12, column items and lateral items are arranged as elements of the top row in the table, and slip description data are arranged so as to correspond with them. Further, in the case where there is relevance between the column items such as between the "business partner" and the "branches of business partner" (for example, in the case where both a branch A and a branch AA are branches of a customer A), the slip description data are arranged so that the relevance thereof can be viewed. In this regard, in the present embodiment, a process to improve visibility of the slip descriptions is carried out on the basis of the slip description output information when the DWH server 300 creates the slip description display screen. Further, a display form of the slip description is not limited to this, and it may be one using a graph, for example.

By configuring it as described above, the DWH server 300 according to the present embodiment allows to carry out a process to generate slip description output information in which the content of the used item and the property data are added to the index data of the slip description necessary for creation of the creation slip description; a process to receive various combinations of the column item and the lateral item from the user; and a process to create creation slip descriptions with various kinds of variations selected by the user using the generated slip description output information. Further, since the common item is set up to the index data, it becomes possible to create creation slip descriptions in which the common item is set up to the column item or the lateral item, and it becomes possible to create creation slip descriptions by associating slip descriptions that are not associated with each other with each other depending upon a slip description number.

As explained above, in the embodiment described above, the database (for example, the DWH server DB 310) for storing various kinds of data on businesses is configured so as to include: the slip description data DB 100 for storing slip description data that are slip data generated for every business unit in a business process and slip description data created from the slip data; the index data DB 101 for storing index data that are data utilized for retrieval of the slip description data, the content of a common item (for example, the items such as business partners, item goods, company organizations for execution of businesses and closing date), the content of a key item and the content of a slip description identification information item (for example, the items such as the received order number, the purchase order number and the shipment number) being associated with each other in the slip description data units and being associated with each other in the same item of each of the slip description data in the index data, the content of the common item being suitable for grasp of a business process in each business among items respectively set up to the slip description data on various kinds of businesses, slip description specifying information (for example, the slip description number of the corresponding slip description) capable of uniquely specifying a slip description indicated by the slip description data being set up to the content of the key item, slip description identification information (for example, the slip description numbers such as the received order number, the purchase order number and the shipment number) capable of specifying slip descriptions related to the slip description indicated by the slip description data being set up to the content of the slip description identification information item in the index data; and the slip description creating information DB 102 for storing slip description creating reference information (for example, the slip description creating information), an output target slip description class (for example, the usage slip description type) indicating a class of an output target slip description set up as an output target and a usage slip description class indicating a class of a usage slip description being associated with each other in the slip description creating reference information, the class of the usage slip description being one kind of slip description or two or more kinds of slip descriptions utilized for creation of the output target slip description of the output target slip description class among slip descriptions indicated by the slip description data stored in the slip description data DB 100. Therefore, by using such databases, it becomes possible to provide the slip description data on the plural kinds of businesses at a low cost without requiring a complex program for managing the slip descriptions. Further, it becomes possible to readily extract even the slip description for which association with the slip description number is not made by associating it with the common item, and it is possible to create slip description data on plural kinds of businesses using slip descriptions for each of which association with the slip description number is not made.

Namely, by providing the databases each having the configuration described above, it is possible to specify the slip descriptions associated with each other by the common item as a usage slip description used for creation of the creation slip description regardless of whether association between slip descriptions is made or not in the server (for example, the DWH server 300). For this reason, it becomes possible to readily extract a necessary slip description from even the slip descriptions for each of which association with the slip description number is not made, and this makes it possible to create slip description data on plural kinds of businesses with various types in response to a request of the user. Therefore, it is possible to deal with slip description data cross plural kinds of businesses, and it becomes possible to reduce a work burden to manage the slip description data associated between complex businesses.

Further, in the embodiment described above, the database is provided in the management server (for example, the DWH server 300) that manages various kinds of data on businesses. Further, the management server (the DWH server 300) has the database (for example, the DWH server DB 310) for storing various kinds of data on businesses is configured so as to include: the slip description data DB 100 for storing slip description data that are slip data generated for every business unit in a business process and slip description data created from the slip data; the index data DB 101 for storing index data that are data utilized for retrieval of the slip description data, the content of a common item (for example, the items such as business partners, item goods, company organizations for execution of businesses and closing date), the content of a key item and the content of a slip description identification information item (for example, the items such as the received order number, the purchase order number and the shipment number) being associated with each other in the slip description data units and being associated with each other in the same item of each of the slip description data in the index data, the content of the common item being suitable for grasp of a business process in each business among items respectively set up to the slip description data on various kinds of businesses, slip description specifying information (for example, the slip description number of the corresponding slip description) capable of uniquely specifying a slip description indicated by the slip description data being set up to the content of the key item, slip description identification information (for example, the slip description numbers such as the received order number, the purchase order number and the shipment number) capable of specifying slip descriptions related to the slip description indicated by the slip description data being set up to the content of the slip description identification information item in the index data; and the slip description creating information DB 102 for storing slip description creating reference information (for example, the slip description creating information), an output target slip description class (for example, the usage slip description type) indicating a class of an output target slip description set up as an output target and a usage slip description class indicating a class of a usage slip description being associated with each other in the slip description creating reference information, the class of the usage slip description being one kind of slip description or two or more kinds of slip descriptions utilized for creation of the output target slip description of the output target slip description class among slip descriptions indicated by the slip description data stored in the slip description data DB 100. Further, the management server (the DWH server 300) is configured so as to: receive designation of the output target slip description class from client terminals (the clients 10, 20); by referring to the slip description data DB 100, determine the usage slip description class that is a class of a usage slip description utilized for creation of the output target slip description of the received output target slip description class; by referring to the index data DB 101, extract the index data corresponding to the slip description data of the usage slip description that is the slip description of the determined usage slip description class; by referring to the slip description data DB 100, extract the content of the used item (for example, the numerical item) defined in advance and utilized for creation of the output target slip description among the items set up to the slip description data of the usage slip description; add the content of the extracted used item into the extracted index data; by referring to the slip description data DB 100, analyze the slip description data of the slip description specified by the slip description identification information, the index data to which the content of the used item is added are set up to the slip description identification information; determine the necessary data necessary when to create the slip description data of the output target slip description of the content of the added used item in accordance with the analysis result; generate data of a setup item (calculation item) to be set up to the slip description data of the slip description of the output target slip description class using the necessary data; create the slip description data of the output target slip description; and transmit the slip description data of the created output target slip description to the client terminals 10, 20. Therefore, it becomes possible to provide slip description data on the plural kinds of businesses at a low cost without requiring a complex program for managing slip descriptions. Further, it becomes possible to readily extract even the slip description for which association with the slip description number is not made by associating it with the common item, and it is possible to create slip description data on plural kinds of businesses using slip descriptions for each of which association with the slip description number is not made.

Further, in the embodiment described above, the content of used item is numerical data of a numerical item, and the data of the setup item are data of the calculation item calculated using the numerical data. Therefore, it is possible to readily create various kinds of slip description data having the calculation item and to provide them.

In this regard, in the embodiment described above, the case where selection of a layout is received in the slip description outputting process has been described (see FIG. 5). However, it may be configured so as not to receive selection of a layout in the slip description outputting process. In this case, it may be configured so that a layout (the column item or the lateral item) for every creation slip description is defined, the output item is set up to the master data, or all of the items in the slip description output information are outputted.

### Industrial Applicability

According to the present invention, it is useful to provide a system capable of making a variety of inquiries into slip descriptions at a low cost without requiring a complex slip description program.

### Explanation of Reference numerals

- 10, 20: client
- 51: dedicated line
- 52: LAN
- 53: Internet
- 100: slip description data DB
- 200: core business server
- 300: DWH server
- 310: DWH server DB
- 500: slip description outputting system

## Claims

1. A database for storing various kinds of data on businesses, comprising:
a slip description data memory for storing slip description data that are slip data generated for every business unit in a business process and slip description data created from the slip data;
an index data memory for storing index data that are data utilized for retrieval of the slip description data, the content of a common item, the content of a key item and the content of a slip description identification information item being associated with each other in the slip description data units and being associated with each other in the same item of each of the slip description data in the index data, the content of the common item being suitable for grasp of a business process in each business among items respectively set up to the slip description data on various kinds of businesses, slip description specifying information capable of uniquely specifying a slip description indicated by the slip description data being set up to the content of the key item, slip description identification information capable of specifying slip descriptions related to the slip description indicated by the slip description data being set up to the content of the slip description identification information item in the index data; and
a slip description creating reference information memory for storing slip description creating reference information, an output target slip description class and a usage slip description class being associated with each other in the slip description creating reference information, the output target slip description class indicating a class of an output target slip description set up as an output target, the usage slip description class indicating a class of a usage slip description, the class of the usage slip description being one kind of slip description or two or more kinds of slip descriptions utilized for creation of the output target slip description of the output target slip description class among slip descriptions indicated by the slip description data stored in the slip description data memory.

2. The database according to claim 1, wherein the database is provided in a management server that manages various kinds of data on the businesses, and
wherein the management server comprises:
an output target slip description class receiver for receiving designation of an output target slip description class from a client terminal;
a usage slip description class determiner for determining a usage slip description class by referring to the slip description creating reference information memory, the usage slip description class being a class of a usage slip description utilized for creation of the output target slip description of the output target slip description class received by the output target slip description class receiver;
an index data extractor for extracting index data corresponding to the slip description data of the usage slip description by referring to the index data memory, the usage slip description being the slip description of the usage slip description class determined by the usage slip description class determiner;
a used item adder that extracts, by referring to the slip description data memory, the content of a used item defined in advance and utilized for creation of the output target slip description among items set up to the slip description data of the usage slip description, the used item adder adding the content of the extracted used item into the index data extracted by the index data extractor;
a slip description data analyzer for analyzing, by referring to the slip description data memory, the slip description data of the slip description specified by the slip description identification information, the index data to which the content of the used item is added being set up to the slip description identification information;
a necessary data determiner for determining data necessary when to create the slip description data of the output target slip description of the content of the used item added by the used item adder in accordance with an analysis result by the slip description data analyzer;
an output target slip description creator for generating data of a setup item to be set up to the slip description data of the slip description of the output target slip description class using the necessary data determined by the necessary data determiner, the output target slip description creator creating the slip description data of the output target slip description; and
an output target slip description transmitter for transmitting the slip description data of the output target slip description created by the output target slip description creator to the client terminal.

3. The database according to claim 2, wherein the content of the used item is numerical data on numerical items, and
wherein the data of the setup item are data of a calculation item calculated using the numerical data.

4. A management server for managing various kinds of data on businesses, comprising a database for storing the various kinds of data,
wherein the database comprises:
a slip description data memory for storing slip description data that are slip data generated for every business unit in a business process and slip description data created from the slip data;
an index data memory for storing index data that are data utilized for retrieval of the slip description data, the content of a common item, the content of a key item and the content of a slip description identification information item being associated with each other in the slip description data units and being associated with each other in the same item of each of the slip description data in the index data, the content of the common item being suitable for grasp of a business process in each business among items respectively set up to the slip description data on various kinds of businesses, slip description specifying information capable of uniquely specifying a slip description indicated by the slip description data being set up to the content of the key item, slip description identification information capable of specifying slip descriptions related to the slip description indicated by the slip description data being set up to the content of the slip description identification information item in the index data; and
a slip description creating reference information memory for storing slip description creating reference information, an output target slip description class and a usage slip description class being associated with each other in the slip description creating reference information, the output target slip description class indicating a class of an output target slip description set up as an output target, the usage slip description class indicating a class of a usage slip description, the class of the usage slip description being one kind of slip description or two or more kinds of slip descriptions utilized for creation of the output target slip description of the output target slip description class among slip descriptions indicated by the slip description data stored in the slip description data memory, and
wherein the management server comprises:
an output target slip description class receiver for receiving designation of an output target slip description class from a client terminal;
a usage slip description class determiner for determining a usage slip description class by referring to the slip description creating reference information memory, the usage slip description class being a class of a usage slip description utilized for creation of the output target slip description of the output target slip description class received by the output target slip description class receiver;
an index data extractor for extracting index data corresponding to the slip description data of the usage slip description by referring to the index data memory, the usage slip description being the slip description of the usage slip description class determined by the usage slip description class determiner;
a used item adder that extracts, by referring to the slip description data memory, the content of a used item defined in advance and utilized for creation of the output target slip description among items set up to the slip description data of the usage slip description, the used item adder adding the content of the extracted used item into the index data extracted by the index data extractor;
a slip description data analyzer for analyzing, by referring to the slip description data memory, the slip description data of the slip description specified by the slip description identification information, the index data to which the content of the used item is added being set up to the slip description identification information;
a necessary data determiner for determining data necessary when to create the slip description data of the output target slip description of the content of the used item added by the used item adder in accordance with the analysis result by the slip description data analyzer;
an output target slip description creator for generating data of a setup item to be set up to the slip description data of the slip description of the output target slip description class using the necessary data determined by the necessary data determiner, the output target slip description creator creating the slip description data of the output target slip description; and
an output target slip description transmitter for transmitting the slip description data of the output target slip description created by the output target slip description creator to the client terminal.

5. A management program for managing various kinds of data on businesses stored in a database, the database comprising:
a slip description data memory for storing slip description data that are slip data generated for every business unit in a business process and slip description data created from the slip data;
an index data memory for storing index data that are data utilized for retrieval of the slip description data, the content of a common item, the content of a key item and the content of a slip description identification information item being associated with each other in the slip description data units and being associated with each other in the same item of each of the slip description data in the index data, the content of the common item being suitable for grasp of a business process in each business among items respectively set up to the slip description data on various kinds of businesses, slip description specifying information capable of uniquely specifying a slip description indicated by the slip description data being set up to the content of the key item, slip description identification information capable of specifying slip descriptions related to the slip description indicated by the slip description data being set up to the content of the slip description identification information item in the index data; and
a slip description creating reference information memory for storing slip description creating reference information, an output target slip description class and a usage slip description class being associated with each other in the slip description creating reference information, the output target slip description class indicating a class of an output target slip description set up as an output target, the usage slip description class indicating a class of a usage slip description, the class of the usage slip description being one kind of slip description or two or more kinds of slip descriptions utilized for creation of the output target slip description of the output target slip description class among slip descriptions indicated by the slip description data stored in the slip description data memory,
wherein the management program causes a computer to execute:
receiving designation of an output target slip description class from a client terminal;
by referring to the slip description creating reference information memory, determining a usage slip description class, the usage slip description class being a class of a usage slip description utilized for creation of the output target slip description of the output target slip description class received in the receiving designation of an output target slip description class;
by referring to the index data memory, extracting index data corresponding to the slip description data of the usage slip description, the usage slip description being the slip description of the usage slip description class determined in the determining a usage slip description class;
by referring to the slip description data memory, extracting the content of a used item defined in advance and utilized for creation of the output target slip description among items set up to the slip description data of the usage slip description, and adding the content of the extracted used item into the index data extracted in the extracting index data corresponding to the slip description data;
by referring to the slip description data memory, analyzing the slip description data of the slip description specified by the slip description identification information, the index data to which the content of the used item is added being set up to the slip description identification information;
determining data necessary when to create the slip description data of the output target slip description of the content of the used item added by the used item adder in accordance with the analysis result in the analyzing the slip description data of the slip description;
generating data of a setup item to be set up to the slip description data of the slip description of the output target slip description class using the necessary data determined in the determining data necessary when to create the slip description data, and creating the slip description data of the output target slip description; and
transmitting the slip description data of the output target slip description created in creating the slip description data to the client terminal.
